# EUROPEAN PATENT SPECIFICATION

(11) **EP 3 061 969 B1**
(45) Date of publication and mention of the grant of the patent: **02.08.2017**
(21) Application number: 16153315.3
(22) Date of filing: 29.01.2016
(51) Int. Cl.: F04B 39/10, F04B 53/10, F16K 27/02, F16K 15/02

(54) **A CHECK VALVE**
RÜCKSCHLAGVENTIL
CLAPET ANTI-RETOUR

(30) Priority: 26.02.2015 IT MO20150039
(43) Date of publication of application: 31.08.2016
(73) Proprietor: Comet S.p.A., 42124 Reggio Emilia (IT)
(72) Inventor: Vezzosi, Enrico, 42123 Reggio Emilia (IT); Galloni, Dennis, 42123 Reggio Emilia (IT)
(74) Representative: Casadei, Giovanni

(56) References cited:
- EP-A1- 2 029 891
- EP-A2- 2 256 385
- EP-A2- 2 362 097
- KR-B1- 100 909 910
- US-A1- 2007 177 989

## Description

The invention relates to a manifold or conduit for the passage of a fluid.

Several types of check valves are currently available on the market which may be used as inlet valves or delivery valves on pumps exhibiting different characteristics.

Valves which comprise a shutter are mainly used on high-pressure reciprocating positive displacement pumps but not only; the shutter being typically disk-shaped and movable along a longitudinal axis of the valve between a closed position, wherein the shutter is in contact with an abutment seat and prevents passage of the fluid, and an open position, wherein said shutter is separate from the abutment seat, thereby allowing passage of the fluid. An elastic means, typically a spring, is urging the shutter towards the closed position. On the other hand, the pressure exerted by the fluid on the shutter is pushing the shutter towards the open position.

The currently available valves comprise a containment cage via which the shutter of the valve is maintained in the correct position and guided when switching from an open position to a closed position and vice versa. The cage being substantially defined by a plurality of longitudinal fillets arranged on planes parallel to the longitudinal axis of the valve and intersected with annular elements, which annular elements are concentric to the longitudinal axis of the valve. The shutter is essentially surrounded by longitudinal fillets which prevent direct movements of the shutter perpendicularly to the longitudinal axis of the valve.

While intersecting reciprocally, the longitudinal fillets and the annular elements come to define a plurality of through-windows through which the fluid may freely flow.

According to an alternative embodiment of the cage, windows may be provided which are realized as holes within a hollow cylindrical body, the inside diameter of which constitutes the sliding guide of the shutter.

In most cases, the known valves are inserted in suitable seats, which seats are in communication with an inlet conduit and an outlet conduit.

The inlet conduit is parallel or concentric to the longitudinal axis of the valve, whereas the outlet conduit is oriented perpendicularly to the longitudinal axis of the valve. In other terms the fluid, at a pressure sufficient to push the obturator towards the open position, enters into the seat of the valve along its longitudinal axis and exits therefrom along a perpendicular direction.

The Applicant has found that the fluid tends to follow the most straightforward path when crossing the valve seat, i.e. the fluid tends to flow directly from the inlet conduit towards the outlet conduit. This results in an eccentric thrust being exerted on the shutter, with the shutter tending to take on an inclined position, thereby losing the perpendicular orientation to the longitudinal axis of the valve. In turn the shutter is urging and crawling on the longitudinal fillets of the containment cage in an uneven manner, thereby causing a rapid and non-uniform wear of the longitudinal fillets, which then results in shutter jammings.

Examples of known manifolds which suffer from the above drawbacks are disclosed in EP2362097 and EP2256385 documents.

It is an object of the present invention to provide a manifold or conduit for the passage of a fluid, which allows to overcome the drawbacks of the currently available valves.

An advantage of the manifold according to the present invention is that it ensures a uniform thrust on the shutter, while preventing the latter from tilting or suffering any eccentric stresses.

A further advantage of the manifold according to the present invention is that it has a much longer life than currently available valves.

Another advantage of the manifold according to the invention herein, is that it is perfectly interchangeable with the manifolds used at present.

Further characteristics and advantages of the present invention will better emerge from the detailed description that follows of a preferred embodiment of the invention, illustrated by way of non-limiting example in the appended figures wherein:
- figure 1 shows an axonometric view of the valve according to the present invention;
- Figure 2 shows the valve of Figure 1 in section taken along the plane indicated in figure 1;
- Figures 3 and 4 show two views of the valve of Figure 2, in two different operating configurations.

The check valve according to the present invention comprises a seal seat (2). The valve further comprises a shutter (3), which is movable along a longitudinal axis (X) between a closed position, in which it is in contact with the seal seat (2), and an open position, in which it is apart from the seal seat (2). Elastic means (4) are arranged for pushing the shutter (3) towards the closed position.

The valve further comprises a containment cage (51,52), which contains the shutter (3) and comprises a plurality of longitudinal fillets (51) being intersected with annular elements (52), which annular elements define a plurality of through-windows (F).

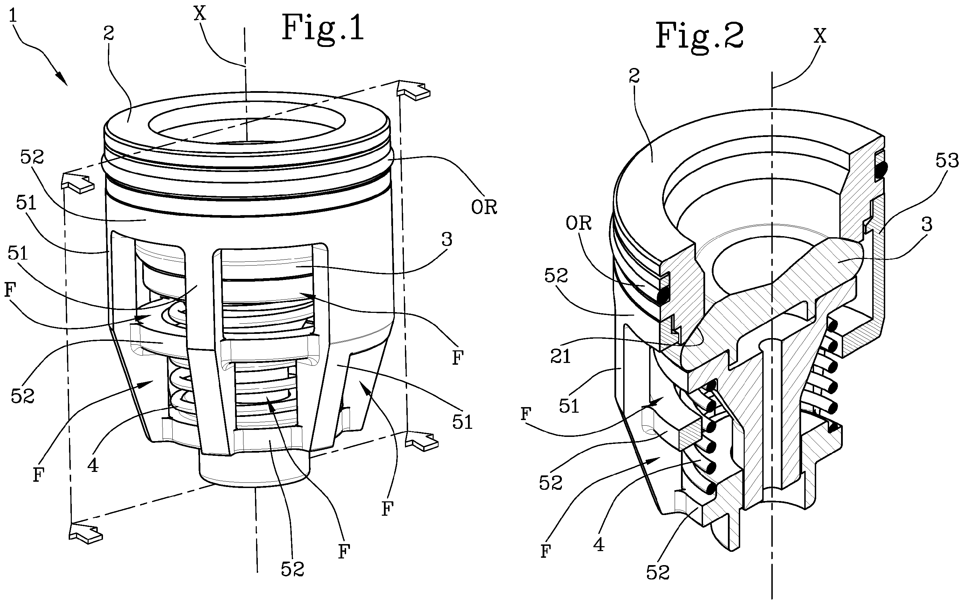

As shown in Figure 1, the cage (51,52) preferably exhibits an overall cylindrical shape, which is concentric to the longitudinal axis (X). The longitudinal fillets (51) are lying in planes which contain the longitudinal axis (X), and are separated from one another by substantially equal angles. The annular elements (52) preferably are lying in planes perpendicular to the longitudinal axis (X) and joined to the longitudinal fillets (51). Preferably the annular elements (52) do not protrude from the longitudinal fillets (51) outwards the cage (51,52), such that the outer surface of the cage (51,52) is overall defined by the longitudinal fillets (51).

In the embodiment illustrated, the cage (51,52) comprises three annular elements (52) being concentric to the longitudinal axis (X). A first annular element (52) is arranged at a front end of the cage, in proximity of the seal seat (2). A second annular element (52) is placed at a bottom end of the cage, opposite to the front end. An intermediate annular element (52) is arranged in an intermediate position to the previous ones. The intermediate annular element (52) is disposed such that the shutter (3), in the open position thereof, comes to be comprised between the former and the front annular element (52). In this way, during the whole stroke between its closed position and open position, the shutter (3) is sliding in contact with the longitudinal fillets (51).

Elastic means (4), for example in the form of a spring, is interposed between the shutter (3) and a bottom end of the cage (51,52). The elastic means (4) is so compressed as to exert a force that pushes the shutter (3) towards the seal seat (2). In its bottom end area, the cage (51,52) may be conical-shaped which is tapering towards the end thereof.

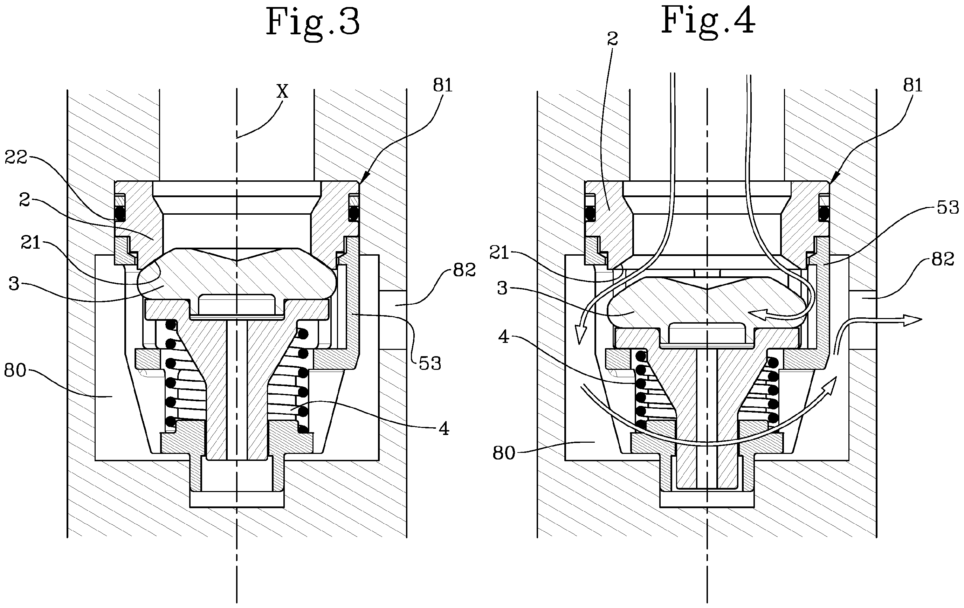

The seal seat (2) is solidal with a front end of the cage (51,52). The seal seat (2) further comprises an abutment surface (21) in contact with which the shutter (3) is arranged in its closed position, as shown in Figure 3. The abutment surface (21) is facing towards the bottom end of the cage (51,52) and is preferably conical-shaped, and so does the abutment surface of the shutter (3), even though both surfaces may be flat.

Overall, the seal seat (2) exhibits a cylindrical shape which is concentric to the longitudinal axis (X) and designed to fit sealingly into an inlet opening (81) of a manifold or conduit for the passage of a fluid, e.g. a suction or exhaust conduit of a pump. Such manifold or conduit further comprises a seat (80) which is in communication with the inlet opening (81) and an outlet opening (82) being in communication with the seat (80). The inlet opening (81) is disposed on a front wall of the seat (80). The outlet opening (82) is disposed on a side wall of the seat (80). In order that a tight coupling with the inlet opening (81) may be ensured, the seal seat (2) is provided with an external groove (22) within which a sealing ring (OR) may be housed.

Advantageously, the cage (51,52) comprises at least one closed wall (53), which wall (53) is so structured as to occupy an area of a certain extension that closes at least one of the windows (F). This entails that the fluid, while flowing through the seal seat (2), may flow outwards the cage (51,52) through the windows (F), while finding however a barrier defined by the closed wall (53).

The presence of the closed wall (53) involves an extremely advantageous technical effect. The valve according to the present invention may indeed be inserted into the seat (80) of the manifold or conduit disclosed above, such that the closed wall is arranged in front of the outlet opening (82). In the open position of the shutter (3), the fluid therefore cannot find a direct path from the inlet opening (81) to the outlet opening (82), since such direct path is hindered by the closed wall (53). The fluid is therefore forced to flow around the closed wall (53), thereby flooding the seat (80) evenly before exiting through the outlet opening (82). This implies the fluid applying a uniform thrust on the shutter (3), which shutter (3) is shifted in its open position while maintaining a constant orientation perpendicular to the longitudinal axis (X), i.e., without tilting. It follows that also the contact between the shutter (3) and the longitudinal fillets (51) of the cage (51,52) is uniform and well distributed among all longitudinal fillets (51), whereby wear of the longitudinal fillets (51) is drastically reduced.

The extension of the closed wall (53) may be defined according to the destination of the valve and the conformation of the seat (80), wherein the valve shall be positioned, with particular reference to the position and shape of the outlet opening (82) toward which the closed wall (53) must be facing.

In the embodiment illustrated, the closed wall (53) is extending between two consecutive longitudinal fillets (51). Preferably the closed wall (53) is in the form of a cylinder portion connected to the two longitudinal consecutive fillets (51). In the illustrated example the closed wall (53) is further extending between two consecutive annular elements (52). In particular, the closed wall (53) is extending along the longitudinal axis (X) relative to the stroke performed by the shutter (3) between the closed position and the open position. In this way the fluid finds the closed wall (53), regardless the position taken on by the shutter (3).

The manifold according to the present invention offers important advantages.

Owing to the closed wall (53), a uniform thrust on the shutter (3) may indeed be exerted, which shutter (3) consequently is displaced while remaining parallel to itself, namely while maintaining a constant orientation with respect to the longitudinal axis (X). The contact between the shutter and the cage (51,52) may then be distributed evenly on all longitudinal fillets (51), with the wear thereof being drastically reduced if compared to the currently available valves.

Owing to its conformation and size, the valve herein disclosed may be used in replacement of the currently available valves without the need of having to adapt the housing seats.

## Claims

1. A manifold or conduit for the passage of a fluid, comprising: a seat (80); an inlet opening (81), disposed on a front wall of the seat (80); an outlet opening (82), arranged on a side wall of the seat (80); a check valve (1) comprising:
a seal seat (2); a shutter (3) being movable along a longitudinal axis (X), between a closed position, wherein it is in contact with the seal seat (2), and an open position, in which it is apart from the seal seat (2); elastic means (4), predisposed for pushing the shutter (3) towards the closed position; a containment cage (51,52), which contains the shutter (3) and comprises a plurality of longitudinal fillets (51) intersected with annular elements (52) which define a plurality of passing-through windows (F); wherein the cage (51,52) comprises at least one closed wall (53), which is so structured as to occupy an area of a certain extension, that closes at least one of the windows (F); **characterized in that** the valve (1) is inserted within the seat (80) and disposed with the closed wall (53) facing the outlet opening (82).

2. A manifold according to claim 1, wherein the closed wall (53) extends between at least two consecutive longitudinal fillets (51).

3. A manifold according to claim 1, wherein the closed wall extends between at least two consecutive annular elements (52).

4. A manifold according to claim 1, wherein the cage (51,52) exhibits an overall cylindrical configuration which is concentric to the longitudinal axis (X).

5. A manifold according to claim 1, wherein the seal seat (2) is solidal with a front end of the cage (51,52).

6. A manifold according to claim 1, wherein the elastic means (4) is interposed between the shutter (3) and a bottom end of the cage (51,52).

## Patentansprüche

1. Verteiler oder Leitung für das Durchströmen eines Fluids, umfassend:
einen Sitz (80); eine Einlassöffnung (81), angeordnet an einer frontseitigen Wand des Sitzes (80); eine Auslassöffnung (82), angeordnet an einer Seitenwand des Sitzes (80); ein Rückschlagventil (1), umfassend:
einen Dichtungssitz (2); eine Klappe (3), die entlang einer Längsachse (X) zwischen einer geschlossenen Position, in der sie mit dem Dichtungssitz (2) in Berührung ist, und einer offenen Position, in der sie vom Dichtungssitz (2) entfernt ist, bewegbar ist; elastische Mittel (4), die ausgelegt sind, um die Klappe (3) hinführend zur geschlossenen Position zu schieben; einen Halterungskäfig (51, 52), der die Klappe (3) enthält und eine Vielzahl an Längsleisten (51) umfasst, die sich mit ringförmigen Elementen (52) überschneiden, die eine Vielzahl an Durchführungsfenstern (F) definieren, wobei der Käfig (51, 52) mindestens eine geschlossene Wand (53) umfasst, die so gebaut ist, dass sie eine Fläche einer bestimmten Ausdehnung einnimmt, die mindestens eins der Fenster (F) verschließt,
**dadurch gekennzeichnet, dass**
das Ventil (1) in den Sitz (80) eingefügt und so angeordnet ist, dass die geschlossene Wand (53) der Auslassöffnung (82) zugewandt ist.

2. Verteiler nach Anspruch 1, wobei sich die geschlossene Wand (53) zwischen mindestens zwei aufeinanderfolgenden Längsleisten (51) erstreckt.

3. Verteiler nach Anspruch 1, wobei sich die geschlossene Wand (52) zwischen mindestens zwei aufeinanderfolgenden ringförmigen Elementen (52) erstreckt.

4. Verteiler nach Anspruch 1, wobei der Käfig (51, 52) eine zylindrische Gesamtkonfiguration aufweist, die konzentrisch zur Längsachse (X) angeordnet ist.

5. Verteiler nach Anspruch 1, wobei der Dichtungssitz (2) fest mit einem frontseitigen Ende des Käfigs (51, 52) verbunden ist.

6. Verteiler nach Anspruch 1, wobei die elastischen Mittel (4) zwischen der Klappe (3) und einem unteren Ende des Käfigs (51, 52) eingesetzt sind.

## Revendications

1. Collecteur ou conduit pour le passage d'un fluide, comprenant : un siège (80) ; une ouverture d'entrée (81) disposée sur une paroi antérieure du siège (80) ; une ouverture de sortie (82) disposée sur une paroi latérale du siège (80) ; un clapet anti-retour (1) comprenant :
un siège étanche (2) ; un obturateur (3) étant mobile le long d'un axe longitudinal (X), entre une position de fermeture, dans laquelle il se trouve en contact avec le siège étanche (2), et une position d'ouverture, dans laquelle il est séparé du siège étanche (2) ; un moyen élastique (4) prédisposé pour pousser l'obturateur (3) vers la position de fermeture ; une cage de contenance (51, 52) contenant l'obturateur (3) et qui comprend une pluralité de congés longitudinaux (51) croisant des éléments annulaires (52) qui définissent une pluralité de fenêtres passantes (F) ;
dans lequel la cage (51, 52) comprend au moins une paroi fermée (53) étant structurée de manière à occuper une zone d'une certaine extension qui ferme au moins une des fenêtres (F) ;
**caractérisé en ce que**
le clapet (1) est inséré à l'intérieur du siège (80) et disposé avec la paroi fermée (53) face à l'ouverture d'entrée (82).

2. Collecteur selon la revendication 1, dans lequel la paroi fermée (53) se prolonge entre au moins deux congés longitudinaux (51) consécutifs.

3. Collecteur selon la revendication 1, dans lequel la paroi fermée se prolonge entre au moins deux éléments annulaires (52) consécutifs.

4. Collecteur selon la revendication 1, dans lequel la cage (51, 52) présente une configuration générale cylindrique étant concentrique à l'axe longitudinal (X).

5. Collecteur selon la revendication 1, dans lequel le siège étanche (2) est solidaire d'une extrémité frontale de la cage (51, 52).

6. Collecteur selon la revendication 1, dans lequel le moyen élastique (4) est interposé entre l'obturateur (3) et une extrémité de fond de la cage (51, 52).
